# EUROPEAN PATENT APPLICATION

(11) **EP 4 513 852 A1**
(43) Date of publication of application: **26.02.2025**
(21) Application number: 23193307.8
(22) Date of filing: 24.08.2023
(51) Int. Cl.: H04L 65/1069, H04L 65/61, H04L 65/65, H04L 65/80, H04W 76/15, H04L 65/75

(54) **ADAPTIVE STREAMING FOR A MULTI-MNO-ENABLED ELECTRONIC DEVICE**

(71) Applicant: VOLKSWAGEN AG, 38440 Wolfsburg (DE)
(72) Inventor: Montero Bayo, Luca, 12049 Berlin (DE); Pfadler, Andreas, 13357 Berlin (DE)

(57) **Abstract**

A method for adaptive streaming in an electronic device (105) connected to more than one mobile network operator, MNO (102 to 104), the method comprising the steps of: entering (201) a state requiring video data streaming from the electronic device (105) to a remote electronic device, transmitting (207) to the remote electronic device (101) a first data streaming comprising a plurality of frames of the video data via a first radio link of a first MNO, transmitting (208) to the remote electronic device (101) a second data streaming comprising a subset of the plurality of frames of the video data via a second radio link of a second MNO, wherein the subset of frames comprises key frames of the video data.

## Description

The present disclosure relates to a method for improving service reliability in critical applications requiring data streaming in mobile communication. Particularly, the method is applicable when there are more than one mobile network operators, MNOs, providing mobile communication service to a receiver (or otherwise to a terminal, user equipment or more generically to an electronic device).

Prior art defines an automated vehicle, also known as an AV, an autonomous vehicle, a self-driving car, a driverless car, a robo-car, or a robotic car, which is a vehicle that is capable of sensing its environment and moving safely with little or no human input. Frequently when such AVs operate autonomously or are tele-operated, data streaming is exchanged between an AV and a control center. Such data streaming may include video streaming.

With respect to video streaming, adaptive protocols are now widespread among multiple day-to-day services. Those applications that rely on timely delivery of the best possible video experience make use of several data streams of video at different resolutions and/or bitrates, from which the client can choose based on preference, link capacity, or end-device e.g. Youtube^{™}. However, these different data streams are offered through the same path, routing-wise, and the capacity of the server is always assumed sufficient.

Techniques of adaptive video streaming are applicable in a plurality of different scenarios such as remote monitoring (surveillance) of critical premises or objects, unmanned flying objects control or fleet management.

In the execution of an application between a terminal and an application service, such as video streaming towards a remote operator for remote guidance, parameters of a transmitted video will depend on channel conditions and the experienced QoS, which are at the same time dependent on an MNO. Conventional adaptive streaming protocols make use of different streams of videos of different resolutions. The videos are divided into segments, and the client-server connection evaluates the parameters of the connection to select a segment of the appropriate resolution considering such connection parameters. In case of a sudden change of QoS (such as those in a fast-moving vehicular scenario), a 1-to-1 video streaming using one MNO may not have enough time to react to adapt the streaming resolution, which may result in loss of the video stream.

It is thus an object of the present disclosure to overcome or reduce at least some of the drawbacks of the prior art and to provide a method for improving service reliability in critical applications requiring video data streaming in mobile communication. Particularly, when there are more than one mobile network operators, MNOs, providing mobile communication service to a receiver/terminal. The given task is solved by the subject-matter of the independent claim 1. Advantageous embodiments of the invention can further be gained from the dependent claims and/or optional features of the description.

### Description of the invention

In the case for an adaptive streaming server which has access to multi-MNO connectivity to transmit different data streams, it is so far unclear how can the multiple connectivity streams be used to guarantee the best user experience and a reliable data stream. Further, it is undefined so far how can adaptive streaming be realized in Multi-MNO scenarios where the connection with each MNO offers a different QoS/pQoS. Therefore, the present disclosure addresses these problems as follows.

A first aspect of the invention refers to a method for adaptive streaming in an electronic device connected to more than one mobile network operator, MNO, the method comprising the steps of: entering a state requiring video data streaming from the electronic device to a remote electronic device, transmitting to the remote electronic device a first data streaming comprising a plurality of frames of the video data via a first radio link of a first MNO, transmitting to the remote electronic device a second data streaming comprising a subset of the plurality of frames of the video data via a second radio link of a second MNO, wherein the subset of frames comprises key frames of the video data.

The benefit of the method according to the first aspect of the present disclosure that the reliability of data streaming and/or the flexibility to change the required data rates are enhanced. Further, there is no MNOs switching when data delivery problems occur because the additional one or more MNOs are always delivering the at least one second, backup video streaming. The first data streaming and the second data streaming may originate from the same initial data stream, for example a RAW data stream captured by a camera. In other words, the second data streaming is a version of the first data streaming in terms of its frame rate.

In the context of video encoding/decoding a keyframe is the full frame of the image in a video that is intracoded only and does not require data of any other frame. Subsequent frames (or other frames in general), i.e. the delta frames, only contain information that has changed. Keyframes will appear multiple times within a stream, depending on how it was generated. Key-frames may have different names depending on an applied coding scheme/standard. Historically they are called I-frames but different names are now used to identify a generally similar concept of a key-frame e.g. MPEG-2 I-frame, VPX keyframe, H.264 IDR (instantaneous decoder refresh) [RFC6184], H.265 IDR / CRA (clean random access) / BLA (broken link access) / RAP (random access point) [RFC7798]. This approach is preferred because a loss of a key-frame (or part thereof) can cause temporal artifacts or loss of a complete segment/chunk of video. In the example, these artifacts can blind a remote operator of an AV and lead to an impaired user experience or hazards in relation to safety-critical scenarios.

The step of entering a state requiring data streaming from the electronic device to the remote electronic device (e.g. a server device at a control center) may be initiated by the electronic device, for example as a result of an accident of other unexpected scenario that might require assistance of a control center, or may be initiated by the control center, for example on a scheduled basis or for example for a routine check of an AV. Although, the terminal may be an AV the first aspect of the present disclosure is not limited thereto.

Optionally, such an AV may specifically plan driving routes so that there is always available one or more of the second MNOs in addition to the first MNO. Such planning allows to address critical movement scenarios, for example of very important persons or goods. In an exemplary scenario a terminal selects among the MNOs that can support the service with the required QoS (i.e. a predictive pQoS profile can support the expected data rate) the one with better pQoS estimation to transmit the desired stream. This MNO may be labelled as MNObest. Subsequently, the terminal selects at least one of the MNOs that have a pQoS lower than MNObest (ordered) to transmit at least one lower data rate stream with fewer frames. Consequently, an AV using tele-operated driving in a safety-critical scenario can transmit a lower data rate (lower frame rate) stream in the second best MNO-pQoS as a backup stream for safety reasons, while transmitting e.g. 60fps Full-HD with the best MNO-pQoS for better user experience at the remote operator's side.

According to an option of the first aspect of the present invention the state requiring data streaming is any one of a tele-operated driving, a tele-operated assistance or a hazard-resolution state, which are typically initiated by the terminal (although the state may also be explicitly requested remotely from the control center). In such scenarios it is particularly important to support reliability of data streaming or the flexibility to change the streaming configuration for the data streaming. Delivery of different data streams, in terms of frame rate, of the same source content (after processing) over different MNOs is beneficial to mitigate the switching lag required for adaptive streaming when only one delivery path is available.

According to an option according to any previous variants of the first aspect of the present invention the method further comprises the following steps prior to transmitting: determining quality of service, QoS, for each of the MNOs, determining a first QoS required for the first data streaming, determining a second QoS required for the second data streaming, selecting the first MNO as the MNO that supports the first QoS, and selecting at least one second MNO, different from the first MNO, that supports the second QoS. Consideration of QoS may further improve chances of delivery of the first data stream and/or the second data stream. When a required QOS is supported, usually only physical issues like a link failure will result in a necessity to use the second data stream at a recipient's side.

According to an option according to any previous variants of the first aspect of the present invention the key frames comprise intra-coded frames, I-frames, or instantaneous decoder refresh frames, IDR-frames, only. Depending on the encoding type and it's configuration the I-frames or IDR frames will come at different intervals. Typically the more sophisticated the codec and the more stable a video scene is, the lower the I-frame rate there may be and depending on encoding settings there may be an I-frame for example every 10 frames up to even 300 frames. Nevertheless, this parameter is configurable at the encoder.

According to an option according to the previous variant of the first aspect of the present invention the key frames comprise only I-frames and predicted frames, P-frames. The P-frames refer to previously encoded I-frames or P-frames. This variant is beneficial for low frequency I-frames and further allows selection of one or more P-frames. For example, to avoid decoding problems the selected P-frames refer only to the selected I-frames. In another scenario, the selected P-frames refer to the selected I-frames and/or one or more of the already selected P-frames. Variable selection of P-frames allows for some flexibility in forming the second data stream, particularly, when the frequency of I-frames is relatively low. As a tradeoff, this approach may require separate encoding of the selected frames only.

According to an option according the first aspect of the present invention the subset of frames comprises a subset of closed groups of pictures, GOPs, selected according to a repeating pattern. As the name suggests, a closed GOP is not referenced from its outside. In other words a frame belonging to a closed GOP can only refer to frames within its own GOP. Thus a closed GOP may be considered a fully functional data stream within a data stream. From this perspective selection of GOPs is relatively time efficient and may be made according to a selection pattern.

According to an option according the previous variant of the first aspect of the present invention the repeating pattern is one of every odd or every even or every n-th.

According to an option according to any previous variants of the first aspect of the present invention the second data streaming comprises a data structure according to a data structure of the first data streaming while comprising payload data for only the key-frames. [a question to the inventor: can one remove data from a stream w/o re-encoding / is it sufficient to modify some pointers/references and remove data from respective containers as exemplified in the following sentence?] Alternatively, data structures (e.g. pixel data structures defining pixel values) concerning a frame may be emptied (or replaced with dummy data) while maintaining decoding time stamps DTS and presentation time stamps PTS of the video data stream. This will result for example in blank frames (or a corrupt frame), which may be detected by a decoder and replaced with the previous frame so that a viewer does not see the emptied frames. Therefore, in such a case the second data streaming may comprise a data structure for all frames but comprise payload data for only selected frames, e.g. key-frames. This option allows to generate the second data streaming without transcoding or re-encoding.

According to an option according to any previous variants of the first aspect of the present invention, when there are more than one second MNOs the second data streams differ among the second MNOs by comprising different subsets of frames of the first data streaming. This feature allows to control the level of redundancy of the additional data streams that are generated and transmitted to the server. For very critical scenarios, the terminal may determine (according to one or more pre-defined configurations) or be configured (for example by the remote device) to apply two or more redundant data streams thereby utilizing for example three MNOs and their corresponding communication links.

According to an option according to any previous variants of the first aspect of the present invention, the method further comprises a step of notifying the remote device that the first data streaming and the second data streaming correspond to one another (correspondingly a group of streams may be identified). Explicit identification that the first data streaming and the second data streaming correspond to one another may be beneficial in some scenarios and allows a receiving electronic device to quickly discard redundant data of the one or more second data streams if a corresponding first data stream (or a different second data stream of better frame rate) is available.

Correspondingly to the first aspect of the disclosure a second aspect of the present disclosure is an electronic device comprising a processor configured to execute all steps of the method according to the first aspect of the present disclosure according to any variants thereof presented above.

According to an option according to any previous variants of the second aspect of the present invention the electronic device is an automatic vehicle. In other variants the electronic device may be a part of the automatic vehicle or part of a vehicle in general.

A third aspect of the present invention is a method for adaptive streaming for a second electronic device, connected to more than one mobile network operator, MNO, the method comprising the steps of: receiving from an electronic device a notification that the electronic device is entering a state requiring video data streaming from the electronic device to the second electronic device, receiving from the electronic device a first data streaming comprising a plurality of frames of the video data via a first radio link of a first MNO, and receiving from the electronic device a second data streaming comprising a subset of the plurality of frames of the video data via a second radio link of a second MNO, wherein the subset of frames comprises key frames of the video data. Optionally, the entering a state requiring data streaming from the UE to the server may be itself initiated by the server.

A fourth aspect of the present invention is a computer program comprising instructions which, when the program is executed by a device, preferably electronic device according to the second aspect of the present disclosure, cause the device, to carry out all the steps of the method according to the first aspect of the present disclosure according to any variants thereof presented above.

A fifth aspect of the present invention is a computer-readable storage medium comprising instructions which, when executed by a device, preferably the electronic device according to the second aspect of the present disclosure, cause the device to carry out all the steps of the method according to the first aspect of the present disclosure according to any variants thereof presented above.

Such computer programs are typically executed by utilizing the computing resources in a computing device e.g. a processor or a controller. Applications are stored on a non-transitory medium. An example of a non-transitory medium is a non-volatile memory, for example a flash memory while an example of a volatile memory is RAM. The computer instructions are typically executed by a processor. These memories are exemplary recording media for storing computer programs comprising computer-executable instructions performing all the steps of the computer-implemented method according the technical concept presented herein.

The various embodiments of the invention mentioned herein can be advantageously combined with each other, unless otherwise specified in the individual case.

Various objects and advantages of the present invention will become apparent to those skilled in the art from the following detailed description of embodiments, when read in light of the accompanying drawings.

### Brief description of the figures

Reference is now made to the following figures, in order to describe preferred embodiments of the invention in more detail.
- Figure 1: presents a high level diagram of a system according to the present invention,
- Figure 2: presents a diagram of a method according to the present invention,
- Figure 3: presents a diagram of a configuration data container for a terminal,
- Figure 4: presents examples of selection of subsets of frames of the first data streaming, and
- Figure 5: presents information of figure 2 in a client-server relationship variant.

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

As utilized herein, the term "example" means serving as a non-limiting example, instance, or illustration. As utilized herein, the terms "for example" and "e.g." introduce a list of one or more non-limiting examples, instances, or illustrations.

As used herein, the term "and/or" includes any and all combinations of one or more of the associated listed items. Further, the use of "may" when describing embodiments of the present invention refers to "one or more embodiments of the present invention." Further, in the following description of embodiments of the present invention, the terms of a singular form may include plural forms unless the presented context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present invention. As used herein, the term "and/or" includes any and all combinations of one or more of the associated listed items and expressions such as "at least one of" when preceding a list of elements, modify the entire list of elements.

Reference will now be made in detail to embodiments which are illustrated in the drawings. Effects and features of the exemplary embodiments will be described with reference to the accompanying drawings. Therein, like reference numerals denote like elements, and redundant descriptions are omitted. The present invention, however, may be embodied in various different forms, and should not be construed as being limited to only the illustrated embodiments herein. Rather, these embodiments are provided solely as examples for fully conveying the aspects and features of the present invention to those skilled in the art.

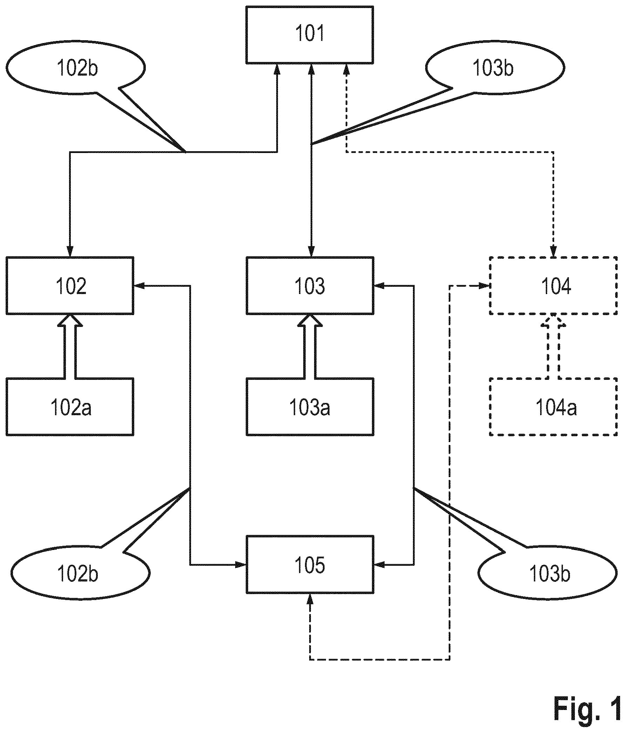

Figure 1 presents a high level diagram of a system according to the present invention. The system comprises a server 101 (or otherwise a remote device or a second electronic device) and a terminal 105 (or otherwise a first electronic device) that are in communication with each other via at least two MNOs 102, 103, 104 i.e. using the respective communication links of the MNOs. At least two MNO are present according to the present invention while any additional MNO(s), to the required two, are optional. When the terminal 105 is to deliver data streaming to the server 101 it selects one MNO 101 as the primary MNO that delivers pQoS 1 higher than a pQoS 2 of an alternative, secondary MNO. Because the pQoS 1 is higher than the pQoS 2 the respective data rate 1 of the primary MNO is higher than that data rate 2 of the alternative, secondary MNO. The higher data rate 1 102a allows to deliver all frames of the first data stream 102b while the lower data rate 2 103a allows only to deliver a subset of frames of the first data streaming as a second data streaming 103b.

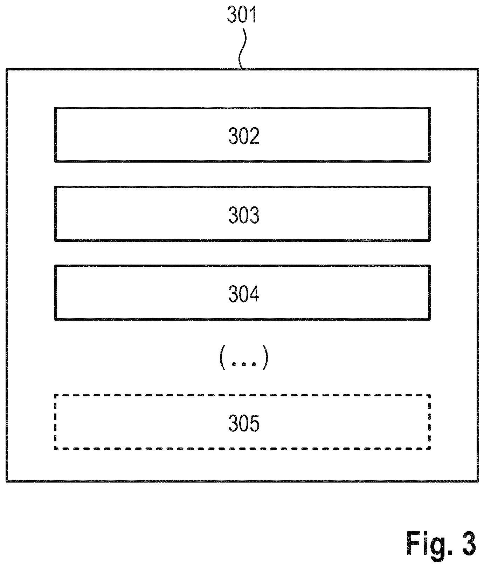

The configuration of the different subset of frames of the first data streaming for each MNO may be determined by the terminal 105 alone (for example based on one or more pre-defined configurations) or the different data rates for each MNO may be configured by the remote device 101 explicitly by means of configuration transmitted to a UE in advance as also described below with reference to figure 3.

The pre-determined configuration may be for example one of:
Configuration 1:
   Stream 1:
      Key-frame interval: 1000ms, 60fps
   Stream 2:
      I-frames, P-frames
Configuration 2:
   Stream 1:
      Key-frame interval: 500ms, 30fps
   Stream 2:
      I-frames
Configuration 3:
   Stream 1:
      Key-frame interval: 750ms, 30fps
   Stream 2:
      I-frames, P-frames
   Stream 3:
      Odd GOPs

In some examples, the configuration of the Stream 1 may be left open to the terminal and not signalled explicitly. In the third configuration there may be present more than three stream configurations that will be selected according to the configured number of MNOs. On the other hand when there are two MNOs and the configuration 3 is applied, then only the first two stream configurations will be used while omitting the remaining ones. In other cases, there may be a specific, dedicated configuration for a configured number of simultaneously used MNOs, for example 2, 3, 4 etc. This allows to configure for example MNO 2 with the Stream 2 differently when there are 2 MNOs and when there are 3 MNOs. Optionally, the video configuration may explicitly identify a video codec such as MPEG-2, H.264, VC-1.

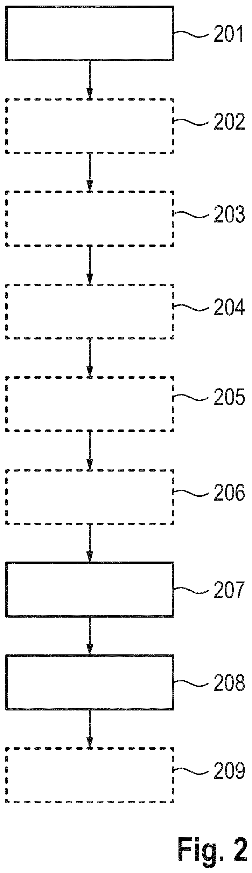

Figure 2 presents a diagram of a method according to the present invention. At step 201 a terminal enters 201 a state requiring video data streaming from the terminal 105 to a remote electronic device 101. The following steps 202 to 206 are optional where at step 202 the terminal determines 202 quality of service, QoS, for each of the MNOs, and determines 203 a first QoS required for a first data streaming. After that, the terminal determines 204 a second QoS required for a second data streaming. Based on the above the terminal selects 205 a first MNO that supports the first QoS, and selects 206 at least one second MNO, different from the first MNO, that supports the second QoS. Once set up, the terminal transmits 207 to the remote electronic device 101 a first data streaming comprising a plurality of frames of the video data via a first radio link of a first MNO, and transmits 208 to the remote electronic device 101 a second data streaming comprising a subset of the plurality of frames of the video data via a second radio link of a second MNO wherein the subset of frames comprises key frames of the video data.

According to an option of step 202 the QoS, for each of the MNOs, is a predictive QoS, pQoS. In such a case, a pQoS is a prediction and the corresponding pQoS model applies different approaches to arrive at predicted QoS. Such approaches may include Artificial Intelligence learning models to improve predictions of pQoS. Therefore, predicting the QoS requirements of a receiver/terminal in given circumstances before executing the corresponding services can potentially improve offering the most suitable services. Naturally, pQoS is also based on input parameters, such as environmental parameters of the receiver/terminal, which also may be differently treated by a pQoS model. Therefore, the variety of pQoS models is significant.

The step 202 of determining QoS for each of the MNOs may be location, network and time dependent and once any of these factors change (which may be determined by the UE) the terminal may re-execute the determining step and execute again the steps of the method that follow the determining step(s). For example when a location A of an AV changes to a location B, the first MNO may be maintained while the second MNO may change to a different MNO.

Although normally the application managing the communication (either on the terminal or on the server) will be aware that the terminal transmits the first data streaming and the second data streaming because they are explicitly requested, a correspondence between the streams may be explicitly indicated 209 by the terminal 105 to the server 101. Such correspondence information may be embedded in the first data streaming and the second data streaming or be communicated separately. For example each data stream may have its identifier and a pair of such identifiers will map both streams to one another. Explicit identification that the first data streaming and the second data streaming correspond to one another allows a server to quickly discard redundant data of the one or more second data streams if a corresponding first data stream (or a different second data stream of better frame rate) is available.

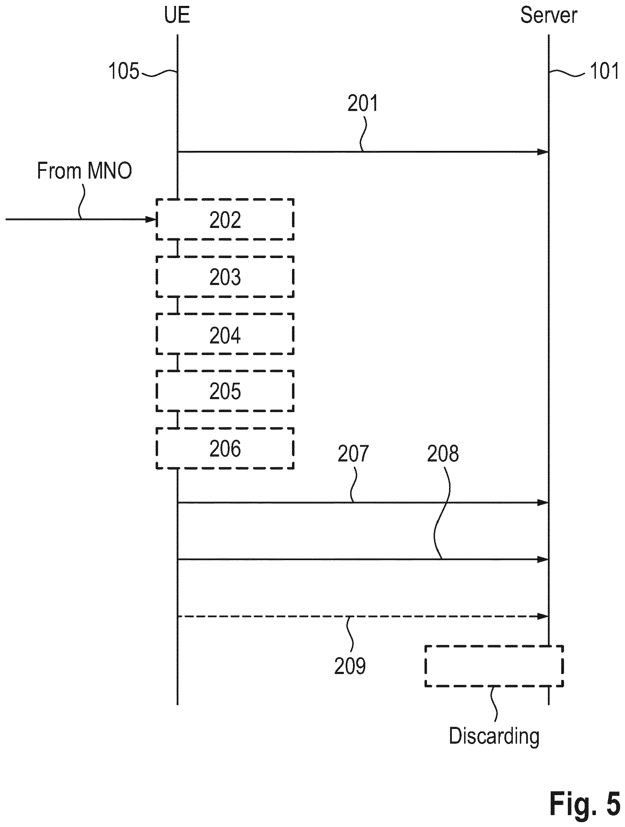

It is clear that the invention also lies in a server 101 exchanging communication with the UE 105 correspondingly to the method presented with reference to figure 2 as also shown using the same steps and reference numbers in figure 5.

Figure 3 presents a diagram of a configuration data container for a terminal. Such a configuration container may be called a multi MNO session config 301. The multi MNO session config indicates at least a number of MNOs 302 and may further configure each MNO streams independently. For example, for the first MNO the configuration may be explicitly given as 'Stream config 1' 303 and or the first MNO the configuration may be explicitly given as 'Stream config 2' 304. Depending on the number of MNOs 302, additional 'Stream config n' may be given for each of the MNOs in addition to the first and second MNOs. The configurations 1 to 3 given in relation to figure 1 above may be delivered to the terminal 105 from the server 101 using the configuration data container described with reference to figure 3.

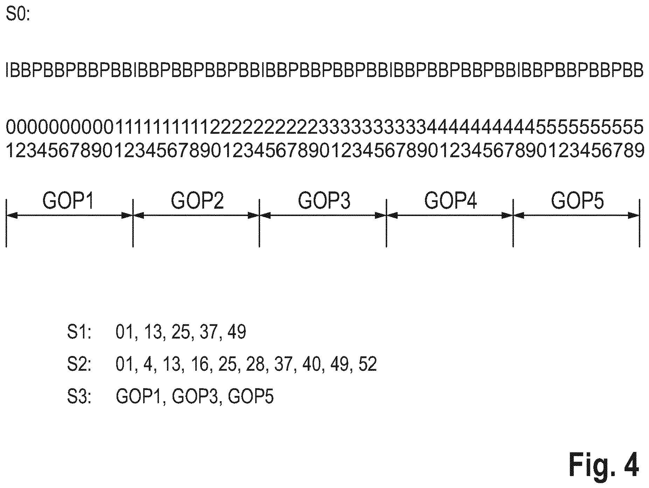

Figure 4 presents examples of selection of subsets of frames of the first data streaming. The first data streaming S0 comprises five GOPs 1 to 5 wherein each GOP comprises 12 frames out of which the first frame is an I-frame. Therefore, the complete first data streaming comprises 60 frames as numbered in the figure from 00 to 60. The second data streaming may be selected according to different subsets of the first data streaming where an example S1 indicates that the second data streaming comprises only I-frames of the first data streaming. It is noted that not all I-frames must be selected when a limitation to I-frames only is applied. When not all frames of a given type are selected in the subset, a rule for selecting them is defined e.g. every second or every third frame.

In turn, an example S2 indicates that the second data streaming comprises only I-frames of the first data streaming and also the first P-frames present directly after an I-frame. Lastly, an example S3 indicates that the second data streaming comprises only odd GOPs of a sequence. The GOPs may be selected according to different patterns e.g. odd GOPs, even GOPs, every third GOP etc.

### Reference signs

- 101: Server
- 102: MNO 1
- 103: MNO 2
- 104: MNO n
- 105: Terminal
- 102a: pQoS 1 and Data Rate 1 for MNO 1
- 102b: first data streaming
- 103a: pQoS 2 and Data Rate 2 for MNO 2
- 103b: second data streaming
- 104a: pQoS n and Data Rate n for MNO n
- 201: entering a state requiring video data streaming from the electronic device to a remote electronic device
- 202: determining quality of service, QoS, for each of the MNOs
- 203: determining a first QoS for a first data streaming
- 204: determining a second QoS for a second data streaming
- 205: selecting a first MNO that supports the first QoS
- 206: selecting at least one second MNO, different from the first MNO, that supports the second QoS
- 207: transmitting to the remote electronic device a first data streaming comprising a plurality of frames of the video data via a first radio link of a first MNO
- 208: transmitting to the remote electronic device a second data streaming comprising a subset of the plurality of frames of the video data via a second radio link of a second MNO
- 209: notifying the remote device that the first data streaming and the second data streaming correspond to one another
- 301: Multi MNO session config
- 302: no. of MNOs
- 303: Stream config 1
- 304: Stream config 2
- 305: Stream config n

## Claims

1. A method for adaptive streaming in an electronic device (105) connected to more than one mobile network operator, MNO (102 to 104), the method comprising the steps of:
entering (201) a state requiring video data streaming from the electronic device (105) to a remote electronic device (101),
transmitting (207) to the remote electronic device (101) a first data streaming comprising a plurality of frames of video data via a first radio link of a first MNO,
transmitting (208) to the remote electronic device (101) a second data streaming comprising a subset of the plurality of frames of the video data via a second radio link of a second MNO,
wherein the subset of frames comprises key frames of the video data.

2. The method according to claim 1, wherein the state requiring data streaming is any one of a tele-operated driving, a tele-operated assistance or a hazard-resolution state.

3. The method according to any one of the preceding claims, further comprising the following steps prior to transmitting:
determining (202) quality of service, QoS, for each of the MNOs determining (203) a first QoS required for the first data streaming,
determining (204) a second QoS required for the second data streaming,
selecting (205) the first MNO as the MNO that supports the first QoS,
selecting (206) at least one second MNO, different from the first MNO, that supports the second QoS.

4. The method according to any of the preceding claims, wherein the key frames comprise intra-coded frames, I-frames, or instantaneous decoder refresh frames, IDR-frames, only.

5. The method according to claim 4, wherein the key frames further comprise P-frames.

6. The method according to any of claims 1 to 3, wherein key frames comprise a subset of closed groups of pictures, GOPs, selected according to a repeating pattern.

7. The method according to claim 6, wherein the repeating pattern is one of every odd or every even or every n-th.

8. The method according to any of the preceding claims, wherein the second data streaming comprises a data structure according to a data structure of the first data streaming while comprising payload data for only the key-frames.

9. The method according to any one of the preceding claims, wherein, when there is a plurality of second MNOs, the second data streams differ among the second MNOs by comprising different subsets of frames of the first data streaming.

10. The method according to any one of the preceding claims, wherein the method further comprises a step of notifying (209) the remote electronic device (101) that the first data streaming and the second data streaming correspond to one another.

11. An electronic device (105) comprising a processor configured to execute all steps of the method according to any of claims 1 to 10.

12. The electronic device of claim 11, wherein the electronic device is part of a vehicle.

13. A method for adaptive streaming for a remote electronic device (101), connected to more than one mobile network operator, MNO (102 to 104), the method comprising the steps of:
receiving from an electronic device (105) a notification that the electronic device (105) is entering (201) a state requiring video data streaming from the electronic device (105) to the remote electronic device (101),
receiving (207) from the electronic device (105) a first data streaming comprising a plurality of frames of the video data via a first radio link of a first MNO, and
receiving (208) from the electronic device (105) a second data streaming comprising a subset of the plurality of frames of the video data via a second radio link of a second MNO,
wherein the subset of frames comprises key frames of the video data.

14. A computer program comprising instructions which, when the program is executed by a device, preferably the electronic device (105) according to claim 11 or 12, cause the device, preferably the electronic device (105) according to claim 11 or 12, to carry out all the steps of the method according to any of claims 1 to 10.

15. A computer-readable storage medium comprising instructions which, when executed by a device, preferably the electronic device (105) according to claims 11 or 12, cause the device, preferably the electronic device (105) according to claims 11 or 12, to carry out all the steps of the method according to any of claims 1 to 10.
